(19) Europäisches Patentamt
European Patent Office
Office européen des brevets

(11) **EP 2 911 069 A1**

(12) **EUROPEAN PATENT APPLICATION**

(43) Date of publication:
**26.08.2015 Bulletin 2015/35**

(51) Int Cl.:
***G06F 17/30*** *(2006.01)*

(21) Application number: **14155976.5**

(22) Date of filing: **20.02.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **FUJITSU LIMITED
Kawasaki-shi,
Kanagawa 211-8588 (JP)**

(72) Inventors:
• **Hu, Bo
Huntingdon, Cambridgeshire PE29 6JL (GB)**
• **Menday, Roger
Guildford, Surrey GU1 2HH (GB)**

(74) Representative: **Hutchison, James
Haseltine Lake LLP
300 High Holborn
London, Greater London WC1V 7JH (GB)**

(54) **Event propagation in graph data**

(57)  Embodiments include a data storage system configured to store data encoding a data graph, the data graph comprising a plurality of resources and a plurality of interconnections, each of the plurality of interconnections connecting two resources from among the plurality of resources and representing a relationship between the linked resources; the data storage system comprising: a data storage apparatus configured to store the data encoding the data graph; a plurality of event handlers, each event handler being associated with one or more resources from among the plurality of resources, and being executable at the or each of the respective associated resources; and an event propagation mechanism configured to respond to a processing event at a resource from among the plurality of resources by triggering the execution of one or more event handlers from among the plurality of event handlers at respective associated resources.

FIGURE 1

EP 2 911 069 A1

**Description**

The present invention lies in the field of data storage, and in particular relates to a mechanism for responding to processing events, such as data modification, in graph databases.

Relational databases store data in rows and columns. The rows and columns compose tables that need to be defined before storing the data. The definition of the tables and the relationship between data contained on these tables is called a schema. A relational database uses a fixed schema. Graph databases represent a significant extension over relational databases by storing data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs.

Graph databases are used in a wide variety of different applications that can be generally categorized into two major types. The first type consists of complex knowledge-based systems that have large collections of class descriptions (referred to as "knowledge-based applications"), such as intelligent decision support and self learning. The second type includes applications that involve performing graph searches over transactional data (referred to as "transactional data applications"), such as social data and business intelligence. Many applications may represent both types. However, most applications can be characterized primarily as either knowledge-based or transactional data applications. Graph databases can be used to maintain large "semantic networks" that can store large amounts of structured and unstructured data in various fields. A semantic network is used as a form of knowledge representation and is a directed graph consisting of nodes that represent concepts, and arcs that represent semantic relationships between the concepts.

Web browsers are configured to handle processing events: after an event is fired on a target, it bubbles up through the document, following the hierarchy established by the nesting of the elements, until it reaches the document root, or the programmer explicitly halts the propagation. Along the bubbling path event handlers can react to the event. Web programmers widely utilize this mechanism, e.g. to coordinate a chain of reactions. In a table element, handlers attached to rows react to local changes, and handlers on the table itself are able to process the bubbled row event and then react accordingly at the whole table level.

However, graph databases are being implemented more widely, and data processing procedures which can be applied to graph data models are sought. Consider a network structure of data entities as a data backend to an e-commerce application. There might be an event raised by the creation of a new shopping cart "Item" inside a "ShoppingCart". Logically, data movement and processing across the entire application may result. For example, interested entities could include stock control, order fulfilment, real time analytics, etc. However, in order to support this effectively, an appropriately configured data storage system is required.

Embodiments of the present invention include a data storage system configured to store data encoding a data graph, the data graph comprising a plurality of resources and a plurality of interconnections, each of the plurality of interconnections connecting two resources from among the plurality of resources and representing a relationship between the linked resources, the data storage system comprising: a data storage apparatus configured to store the data encoding the data graph; a plurality of event handlers, each event handler being associated with one or more resources from among the plurality of resources, and being executable at the or each of the respective associated resources; and an event propagation mechanism configured to respond to a processing event at a resource from among the plurality of resources by triggering the execution of one or more event handlers from among the plurality of event handlers at respective associated resources.

Advantageously, such a data storage system enables a processing event, for example, a write access changing a data value included in a resource, to cause processing to be performed beyond that involved in executing the processing event itself. The inclusion of event handlers in the data storage system, and an event propagation mechanism, provides the functionality required for a single event to cause a series of processing events, the execution of event handlers, which may modify graph data at the resources at which they execute, and may give rise to further processing events in the form of the execution of additional event handlers.

The data graph is a manifestation of stored data, and is a means for representing the stored data, both to a user and to event handlers or other processes internal to the data storage system. It may be that the data graph is encoded as triples, for example, RDF triples, and that a resource is defined by the triples in which it is named as the subject. Alternatively or additionally, it may be that data is stored in a key value store, with triples serving as keys indexing storage locations at which additional data (for example, metadata) defining a resource is stored.

Triples provide for encoding of graph data by characterising the graph data as a plurality of subject-predicate-object expressions. In that context, the subject and object are graph nodes/resources of the graph data, and as such are entities, vertices, resources, instances, or concepts, and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance of that trait, characteristic, or aspect. In other words, a collection of triple statements intrinsically represents directional graph data. The RDF standard provides formalised structure for such triples.

In this document it is assumed that where functions are described as taking place at a resource or some other element of the data graph, that the function is actually being performed on data including the data encoding that graph element. For example, where an event handler is defined as being executable or executed at a resource, the event handler is a process or set of instructions that is carried out and includes read and/or write actions on the data encoding the resource.

The term resource may be substituted by the term vertex throughout this document, and is taken to be a node in the graph, that is to say, a graph element connected to other graph elements by edges or interconnections.

Interconnections are labelled relationships between resources. The interconnections may be directional. An interconnection from a first resource to a second resource denotes or defines a logical connection between the first and the second resource, with the label assigned to the interconnection defining the form of that logical relationship. For example, the first resource may be considered to be a subject resource and the second resource an object resource. The label of the interconnection identifies a property of the subject resource, and the value of the object resource defines a range or value of that property attributable to the subject resource. An interconnection may alternatively be referred to as an edge. Predicate is a term that may be used to define the label assigned to the interconnection.

The data storage apparatus may be embodied by one or more data storage servers. Owing to the desire for redundancy and/or as necessitated by the size of the data graph, the data encoding the data graph may be distributed across more than one data storage server. Each data storage server may include a management module configured to execute range queries on the data stored thereon, so that the data stored on different storage servers can be accessed concurrently. Furthermore, each data storage server may comprise a processor and memory configured collectively to execute event handlers. In embodiments comprising more than one data storage server, the more than one data storage servers may be configured to cooperate to realise a shared management function which provides accessibility to the entire data graph. Each data storage server may be allocated a region of the data graph to store. Alternatively, the allocation of data to data storage server may be performed according to ordering of the encoded graph data.

An event handler may be a process or a set of instructions which, when executed by a processor, cause a process to be performed. An event handler being executed may include read or write accesses being made to the data encoding the resource at which the event handler is executed. The processing may include modifying stored data, and/or considering whether or not to modify data based upon factors which may include characteristics of the processing event giving rise to the execution. Event handlers may be stored as or represented by resources in the data graph.

Associations between event handlers and resources may be in the form of registrations or some other explicit link between the event handler and the resource. For example, an event handler may be stored along with a list of resources at which it is registered, and the event handler is configured to execute at those resources to which it is registered. The scope of resources at which an event handler is registered may be determined by, for example, the data storage server on which the event handler and the resources are registered. In one implementation, it may be that event handlers are only registered to resources with which they are co-located in terms of data storage servers. Event handlers may be configured to execute in response to particular types of processing event. For example, a data handler may be provided per data storage server for each of a predetermined set of processing event types.

The event propagation mechanism is configured to respond to a processing event by triggering the execution of one or more event handlers at respective associated resources. Furthermore, the event propagation mechanism may be configured to respond to the execution of an event handler at a resource by triggering further executions of event handlers at other resources. In that way, a single processing event can propagate and cause effects (event handler executions) at resources other than those modified by the single processing event.

Processing events may be data modification events, including the creation of new resources and/or modification of existing objects/ranges/values in the stored data. Processing events may include the execution of one of the plurality of event handlers, and/or processing involving read/write requests to particular resources by entities external to the data graph. Processing events may also include, for example, an access being made to the resource by an analytics application. A processing event may also be an attempt to read the resource (or at least part of the data encoding the resource). For example, in processing for carrying out lazy update of resources - i.e. only update/refresh the resource when it is necessary.

The triggering of event handlers at resources in response to an initial processing event can be represented by a path (a series of interconnections between resources which received an event notification initiated by the initial processing event; or a series of interconnections between resources at which event handlers were triggered as a consequence of the initial processing event). The triggering of event handlers in response to a particular initial processing event may be halted, that is to say, the data storage system may preclude any future triggering of event handlers in response to the particular initial processing event, when either there are no further resources to which to propagate the event, or when a halt is explicitly called by the propagation process itself or alternatively by an system-level event.

For example, it may be that the processing event at the resource is modification of data encoding the resource by an event handler associated with the resource, from among the plurality of event handlers.

For example, the event propagation mechanism is configured to respond to the execution of an event handler from among the plurality of event handlers at a respective associated resource by triggering the execution of one or more further event handlers from among the plurality of event handlers at respective associated resources.

Advantageously, by responding to data modification carried out by event handlers, which may themselves have been executed in response to an initial processing event such as an external write access, the response to the event is propagated along pathways in the data graph. The pathways may be defined by the interconnections between resources, and/or by registrations of interest between resources. For example, if a processing event occurs at a first resource, and a second resource has a registered interest in the first resource (which registered interest may be stored at the event propagation mechanism and may have been input by a user or database administrator), then the event propagation mechanism may be configured to trigger the execution of an event handler at the second resource, or at least to perform processing to determine whether or not to execute an event handler at the second resource.

A processing event may take one of a number of forms, and the response of the event propagation mechanism may be dependent to some degree upon the form of the processing event to which it is responding. It may be that processing events are categorised by the event propagation mechanism as one of a predetermined plurality of categories or types. The predetermined plurality of categories may be selected in dependence upon the particular implementation scenario. In particular, the processing event at the resource may be a generation of a new resource forming part of the plurality of resources as a consequence of a direction from the resource. For example, the generation of a new resource as a consequence of a direction from another resource may include instantiating the another resource with the new resource. In such an example, the direction provided is the template for the structure of the new resource and/or the properties it is attributed. As a further example of the generation of a new resource as a consequence of a direction from another resource, the creation of the new resource by the another resource may be based on parameters supplied to the creating entity by the another resource. In other words, the another resource and the new resource have a progenitor/progeny relationship. The Progenitor and its Progeny may have the same type (like reproduction in 'natural entities'), or they can be different, but, 'contained' entities (i.e. Patients inside a Hospital, Ingredients inside a Recipe, Posties on a Noticeboard ...).

The creation of new resources is a type of processing event which, in many implementations, will have logical repercussions elsewhere in the data graph. Therefore, it is advantageous to provide a mechanism for disseminating the event and its effects throughout the graph.

It may be that the resources at which event handlers are executed in response to a processing event at a particular resource are logically linked to the particular resource, and therefore the or each of the resources at which the event handlers are triggered by the event propagation mechanism is connected to the resource at which the processing event occurred by one or more interconnection from among the plurality of interconnections.

In turn, the execution of those event handlers at one or more resources may trigger the execution of event handlers at resources connected by interconnections to the one or more resources.

The association of an event handler with a resource may be stored in association with one or more conditions which are applicable by the event propagation mechanism to determine whether or not to trigger the event handler at the resource. For example, it may be that an associated condition is a type of processing event in response to which the event handler will be executed. Alternatively or additionally, there may be categorisations of event handlers, and an associated condition may be a type of event handler being executed, in response to which the event handler in question will be executed.

Responding to the processing event at the resource may include identifying which of the plurality of event handlers are associated with resources connected to the resource, and for each identified event handler, determining whether or not to trigger the event handler at the or each of the resources linked to the resource.

The event propagation mechanism may be configured to trigger event handlers at one resource in response to a processing event at another resource. For example, the one resource may have a registered interest or association in the another resource, recorded by the event propagation mechanism, which registered interest or association causes the triggering of the event handler at the one resource.

Alternatively or additionally, the event propagation mechanism may be configured to trigger the execution of an event handler (from among the plurality of event handlers) associated with a particular resource (from among the plurality of resources) in response to a processing event at the particular resource. It may be the execution of that event handler that triggers further event handler executions at other resources.

The event propagation mechanism may be a centralised function performed at a database management level, for example, a process manager which monitors processing events and is able to determine, for the entire data graph, which event handlers to trigger at which resources in response to a processing event. Alternatively, there may be a process manager provided on a per data storage server basis, which is also able to determine which event handlers to trigger at which resources in response to a processing event, but only in respect of resources stored on the data storage server on which the process manager is provided. As a further alternative and as defined below, the event propagation mechanism may be realised by functionality provided on a per resource basis. For example, the event propagation mechanism may be a local event propagation manager assigned to each of the plurality of resources; each local event propagation manager being configured to receive an event notification from a first neighbouring local event propagation manager, and in response to the received event notification, to determine: whether or not to trigger an execution of any of the event handlers associated with the resource to which the local event propagation manager is assigned; and whether or not to transmit the received event notification to any remaining neighbouring local event propagation managers other than the first neighbouring local event propagation manager; wherein neighbouring local event propagation managers are those local event propagation managers, from among the plurality of local event propagation managers, that are assigned to a resource linked via an interconnection, from among the plurality of interconnections, to the resource to which the local event propagation manager is assigned.

In the above example, a local event propagation manager is provided for each of the plurality of resources. For example, each local event propagation manager is separately configurable. In that way, conditions determining whether or not to execute event handlers at the resource in response to particular processing events at neighbouring resources can be made in view of the specific structural and usage characteristics of the resource. The local event propagation manager assigned to a resource may take the form of stored conditions and instructions or other attributes applicable to the resource. In order to perform a determination or other functionality it may be that certain of the stored instructions are carried out on a processor.

The local event propagation managers provide a mechanism for a propagation path or paths (that is, a series of event handler executions at resources connected by the interconnections) to be established as a response to a processing event without the need to have a preconfigured mapping for which resources should be the subject of event handler executions. The local event propagation managers provide a mechanism by which a propagation path or paths can be established on-the-fly.

Advantageously, such a propagation mechanism allows unsupervised event cascading and chain reactions of event handlers. In addition, localised propagation event management is provided for each graph vertex, thus enhancing distributed processing by removing the central event management. The necessity for predefined application logic is removed, since the decision making associated with event propagation is performed on-the-fly at the individual resource and individual interconnection level, therefore system interoperability of the database improves. Furthermore, overheads associated with initial modelling and rigidity of an implemented model are reduced.

The local event propagation manager approach is particularly advantageous in implementations requiring high flexibility and where a complete initial modelling is not possible. Periodically reshuffling might be necessary to avoid local optimum. The reshuffling may include, for example, when there are multiple candidates to which the event can be propagated, reordering the candidates to introduce some randomness. So the event propagation can be performed on different paths at different times. A distinctive benefit of the local event propagation manager approach is that it provides a framework for accommodating resource-based modelling and programming.

As defined above, the role of the local event propagation manager assigned to a particular resource includes not only determining whether to execute event handlers at the particular resource (in response to a processing event or event handler execution at a neighbouring resource), but also determining whether or not the propagation should continue to other neighbouring resources. An event notification is a mechanism by which local event propagation managers inform one another that a processing event and/or an event handler execution has occurred. The event notification may include details which enable local event propagation managers to determine how to respond to the event notification. For example, an event notification may be categorised according to the type/category of processing event in response to which the event notification was generated. Further details may include a location of the processing event in response to which the event was generated.

The initial generation of the event notification may be performed by a local event propagation manager. For example, a local event propagation manager from among the local event propagation managers is configured to generate an event notification in response to a processing event at either the resource to which the local event propagation manager is assigned or the resource to which one of the respective neighbouring local event propagation managers is assigned.

The generation and subsequent receipt and transmission of the event notification to neighbouring local event propagation managers defines one or more propagation paths of the initial processing event. Each time the event notification is received at a local event propagation manager it may be replicated a number of times and transmitted to neighbouring local event propagation managers, in that way a propagation path can split into more than one path.

The data storage system may be configured to control the length of propagation paths. For example, it may be that an event notification is initiated with a count, and each local event propagation manager is configured to modify the received event notification by reducing the count by one before transferring the event notification to neighbouring local event propagation managers. In that way, a maximum number of interconnections along which the event can propagate is established at initiation of the event notification.

As an alternative mechanism for controlling the length of propagation paths generating the event notification may include attributing an event propagation value to the event notification, and each of the plurality of local event propagation managers is configured to modify the event propagation value in the received event notification by:

- if, in response to receiving the received event notification, it is determined to trigger the execution of any of the event handlers associated with the resource to which the local event propagation manager is assigned, increasing the event propagation value;
- and/or if, in response to receiving the received event notification, it is determined not to trigger the execution of any of the event handlers associated with the resource to which the local event propagation manager is assigned, decreasing the event propagation value;
- and/or if, following the modification of the event propagation value, the event propagation value is below a predetermined threshold value, it is determined not to transmit the received event notification to any of the neighbouring local event propagation managers.

Advantageously, the procedure set out above, in which an initial value attributed to the event notification can be increased or decreased, provides a mechanism for stopping propagation of an event (via the event notification) when the event ceases to be of interest to resources. Effectively, each time an event notification is received at a resource and does not trigger an event handler at the receiving resource, the ability of the event notification to be transferred to further resources (i.e. to the event propagation managers of further resources) is reduced. Too many resources along a path at which the event notification does not trigger an event handler will lead to an end to that particular propagation path. On the other hand, the event notification being received and successfully triggering an event handler may increase the potential distance that the event handler can travel in terms of interconnections.

The event propagation value may be determined by factors including a categorisation/type of the processing event, and characteristics of the resource at which the processing event occurs.

The amount of increase/decrease applied to the event propagation value at a resource may be an incremental increase or decrease that is consistent across all resources in the data graph. Alternatively, it may be that certain resources are weighted in terms of their importance and hence potential effect on event propagation value. For example, each of the local event propagation managers is configured to maintain an interconnection transmission value attributed to each of the plurality of interconnections that link the resource to which the local event propagation manager is assigned to another resource; and the interconnection transmission value attributed to the interconnection linking to the resource from which a received event notification is received determines the amount by which the event propagation value is increased and/or decreased.

For example, in a hierarchical data graph, the level of hierarchy to which a resource belongs may be a factor in determining the interconnection transmission value. It may be that the higher up a hierarchy a resource is, the higher the interconnection transmission value. The interconnection transmission value attributed to interconnections connecting to a particular resource may be equal, or alternatively may be set to be equal initially but then modified differently depending on usage.

Interconnection transmission values may be determined by structural factors (i.e. by the resources and their interconnections), or may be determined by usage history of an event handler at the resource in question. Alternatively, it may be that structural factors and usage history are both taken into account in determining the interconnection transmission value of a particular interconnection.

As a particular example of how usage history may be taken into account as a factor, maintaining the interconnection transmission value attributed to each of the plurality of interconnections that link the resource to which the local event propagation manager is assigned to another resource may include, when an event notification is received from the event propagation manager assigned to the another resource:

- if, in response to receiving the received event notification, it is determined not to trigger the execution of any of the event handlers associated with the resource to which the local event propagation manager is assigned, increasing the interconnection transmission value attributed to the interconnection linking to the another resource; and/or
- if, in response to receiving the received event notification, it is determined not to trigger the execution of any of the event handlers associated with the resource to which the local event propagation manager is assigned, reducing the interconnection transmission value attributed to the interconnection linking to the another resource.

Advantageously, by modifying interconnection transmission values in response to usage history, interconnections along which event notifications are transmitted without triggering an event handler execution at the receiving resource are made more difficult for event notifications to pass through in future. Increasing the interconnection transmission value means that the reduction in event propagation value caused by an event handler not being triggered is more likely to reduce the event propagation value to below the threshold and hence cease propagation of the event notification.

Depending on the implementation, it may be that event notifications and their propagation is an event-type-specific process, so that a resource at which new resource creation events are very likely to trigger an event handler execution, is also a resource at which object modification events of existing resources are much less likely to trigger event handler executions. To handle such differences across processing event categorisations/types generating the event notification may include assigning an event type to the event notification from a predetermined set of event types in dependence upon the processing event in response to which the event notification is generated; and each of the local event propagation managers is configured to maintain, for each of the plurality of interconnections that link the resource to which the local event propagation manager is assigned to another resource, one interconnection transmission value per event type from the predetermined set of event types.

An alternative approach to the local event propagation managers is the provision of a centralised broker or process manager which is itself configured to determine which event handlers to trigger at which resources in response to a processing event, and to trigger the executions accordingly, for example, the event propagation mechanism is a process manager, the process manager comprising: a candidate propagation link identification module configured to identify recorded candidate propagation links, a candidate propagation link being from a second to a first resource from among the plurality of resources, in association with one or more trigger conditions and an event handler associated with the second resource; and an event handler trigger module configured to, in response to a processing event at a resource from among the plurality of resources, refer to the candidate propagation link identification module to identify recorded candidate propagation links in which the resource at which the processing event occurred is the first resource, and, for each identified recorded candidate propagation link, to determine whether or not the one or more trigger conditions are satisfied, and if it is determined that the one or more trigger conditions are satisfied, to trigger the execution, at the second resource of the candidate propagation link, of the event handler associated with the second resource in the candidate propagation link.

The candidate propagation links may be stored in any form. For example, for each resource, the process manager may store a register of resources at which event handlers may be triggered in response to a processing event at the resource in question. The register may include conditions (for example, it may be limited to certain types/categorisations of processing event) in association with specified event handlers. The candidate propagation links may be stored in a storage module at the process manager, or may be recorded as annotations of the graph data.

Processing events may be, for example, the creation of a new resource or the modification of a value defining some or a part of an existing resource. A processing event may be the result of an external write access, and/or may be the execution of an event handler associated with the resource from among the plurality of event handlers.

Alternatively or additionally, the processing event may be caused by or a consequence of the execution of an event handler associated with the resource from among the plurality of event handlers. A processing event may also be a read access to the resource or an attempted read access to the resource.

A process manager may implement functionality based on propagation paths followed by particular processing events. To that end, it may be that the process manager implements a function for mapping or otherwise recording the path of event handler executions resulting from an initial processing event. For example the data storage system may further comprise a propagation path recording module configured to, for the execution of an event handler from among the plurality of event handlers at a respective associated resource, maintain, as a propagation path, a record identifying one or more of the following: the executed event handler and the respective associated resource; any event handlers triggered by the event handler trigger module in response to the execution of the executed event handler at the respective associated resource; any event handlers triggered by the event handler trigger module in response to the execution of the or each of the triggered event handlers; and for the or each of the triggered event handlers, the resource at which the triggered event handler executed, respectively.

Optionally, a data storage system may further comprise: an adaptive relocation module, the adaptive relocation module being configured to relocate a particular resource from among the plurality of resources from a first data storage server from among the plurality of data storage servers to a second storage server from among the plurality of data storage servers, the adaptive relocation module being configured to determine the identity of the second data storage server based on the or each identity of the one or more data storage servers from among the plurality of data storage servers storing resources which are co-recorded in propagation paths with the particular resource.

Advantageously, performance overheads associated with a particular processing event being responded to on more than one data storage server can be mitigated by tending to group resources at which event handlers execute as a consequence of the same initial processing event.

As a further alternative, an adaptive relocation module may be provided as part of a data storage system which includes local event propagation managers, and the adaptive relocation module is configured to identify a pair of resources connected by an interconnection from among the plurality of interconnections to which an interconnection transmission value is attributed that is below a predetermined threshold, and to relocate one of the pair of resources so that the pair are co-located on the same data storage server.

According to embodiments of another aspect, there is provided a method for performance in a data storage system configured to store data encoding a data graph, the data graph comprising a plurality of resources and a plurality of interconnections, each of the plurality of interconnections being directional and linking two resources from among the plurality of resources and representing a relationship between the linked resources, the data storage system comprising a plurality of data storage servers each being configured to store data encoding a portion of the data graph; the method comprising: storing a plurality of event handlers, each event handler being stored in association with one or more resources from among the plurality of resources, and being executable at the or each of the respective associated resources; and responding to a processing event at a resource from among the plurality of resources by triggering the execution of one or more event handlers from among the plurality of event handlers at respective associated resources.

Furthermore, invention embodiments may include a suite of computer programs which, when executed by a distributed network of computing apparatuses, cause the distributed network of computing apparatuses to function as a system embodying the invention.

In embodiments of the present invention, events can follow many different propagation paths, wherein each one is configurable to service different application requirements.

The event propagation can be done both in deterministic and non-deterministic ways to suit the need of different applications. For instance, a non-deterministic approach support better graph based algorithms, e.g. shortest path algorithm and pagerank, while a deterministic approach provide more rigid process control for such as safety critical applications, e.g. for banking.

Invention embodiments support distributed data processing for handling large amount of graph data and events.

Preferred features of the present invention will now be described, purely by way of example, with reference to the accompanying drawings, in which:-

Figure 1 illustrates the effect of a processing event on a data graph in a data storage system embodying the present invention;
Figure 2 illustrates a system architecture of an embodiment of the present invention; and
Figure 3 illustrates an alternative to the system architecture of Figure 2 and which also embodies the present invention.

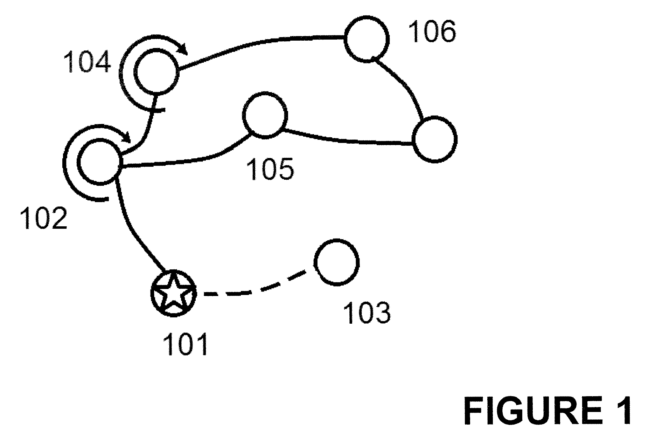

Figure 1 illustrates the effect of a processing event on a data graph stored in a data storage system embodying the present invention on a graph-level representation of data. The star in resource 101 represents the occurrence of a processing event. In this case, the processing event is the assertion of a new link on resource 101, represented by the dotted line. For example, it may be that resource 101 is a class of resource, and a new instance 103 of class 101 is created in the data graph. Other examples of processing events include the execution of an event handler at resource 101, and the modification of data encoding resource 101. In some embodiments, it may be that for a processing event to trigger the execution of event handlers at other resources, some data modification must take place. In such embodiments, a processing event can be considered to be a data modification event.

The event propagation mechanism responds to the processing event at resource 101 by triggering the execution of event handlers at resource 102 and resource 104. An event handler may be a process, set of instructions, and/or executable code, which, when executed, is configured to determine whether or not and how to modify the resource at which it is carried out as a consequence of the processing event triggering the execution, and possibly also to instruct or carry out determined modifications. For example, if resource 102 includes a property based on the count of instances of resource in the class of resource 101, then the value may need to be modified in response to the addition of resource 103. The execution of the event handler at resource 102 determines that the count needs to be modified and carries out the modification.

The event handler may be configured to be executed in response to a particular category of processing event, for example, a new link creation event. The number of categories and manner in which processing events are categorised is implementation dependent. A category specific event handler is only executed in response to a specified category or categories of processing events. Alternatively or additionally, an event handler may be executable in response to a processing event, and may be configured to determine which instructions/code/process to execute based on categorisation or type of the processing event in response to which it is executed. A single event handler may be executable at more than one resource. For example, each data storage server may store only one event handler or one event handler per processing event category, with the event handler being executable at any of the resources stored on the same data storage server.

The event propagation mechanism may be a plurality of local event propagation managers, each local event propagation manager being assigned to a resource. That is to say, the local event propagation mechanism is a local event propagation manager dedicated to each of the resources on a one local event propagation manager per one resource basis.

The local event propagation managers are configured to determine when to execute event handlers, and possibly which event handlers to execute, at the resource to which they are assigned, in response to a processing event. In addition, the local event propagation managers are configured to determine when to notify neighbouring local event propagation managers of processing event.

In the example of Figure 1, a processing event occurs at resource 101. It may be that the local event propagation manager assigned to resource 101 is configured to respond to the processing event by generating an event notification and/or triggering the execution of an event handler at resource 101. In addition, the local event propagation manager may be configured to transfer the generated event notification to neighbouring resources 102 and 103.

There is no response at resource 103. It may be that no event handlers are associated with resource 103, or alternatively it may be that the local event propagation manager assigned to resource 103 receives the event notification and determines that conditions applied to the association between resource 103 and one or more event handlers are not satisfied, so no executions are triggered. Furthermore, because there are no neighbouring resources other than the resource 101 from which the event notification was received, the local event propagation manager assigned to resource 103 determines that no transmission of the event notification is necessary/possible. It is noted that throughout this document the notion of neighbouring, in terms of resources and local event propagation managers assigned to resources, is dictated by interconnections in the graph representation of data, so that any pair of resources connected by an interconnection are neighbouring, as are their respectively assigned local event propagation managers.

The local event propagation manager assigned to resource 102 is configured to receive the event notification from the local event propagation manager assigned to resource 101, at which the processing event occurred, and to determine whether or not to trigger an event handler execution at resource 102. Such a determination may be dependent upon content of the event notification, for example, the event notification may specify a type/category of processing event and/or the identity or location of the resource at which the processing event occurred. For example, the local event propagation manager may store conditions applicable to content of the received event notification, and to determine whether or which event handlers to execute in dependence upon which conditions are satisfied. In the example of Figure 1, it is determined by the local event propagation manager assigned to resource 102 to respond to the received event notification by triggering the execution of an event handler at resource 102, as denoted by the arrow encircling resource 102.

The local event propagation manager assigned to resource 102 is also configured to determine whether or not to transmit the received event notification to neighbouring local event propagation managers other then the local event propagation manager from which the event notification was received. Such a determination may be dependent upon content of the event notification, for example, the event notification may specify a type/category of processing event and/or the identity or location of the resource at which the processing event occurred. For example, the local event propagation manager may store conditions applicable to content of the received event notification, and to determine whether to transmit the event notification in dependence upon which conditions are satisfied. Furthermore, it may be that the execution of an event handler at resource 102 results in modifications being made to the event notification prior to transmission. Alternatively or additionally, the execution of the event handler at resource 102 may result in a new event notification being generated by the local event propagation manager assigned to resource 102 or by a neighbouring local event propagation manager. In the example of Figure 1, it is determined by the local event propagation manager assigned to resource 102 to transmit the event notification to the local event propagation managers assigned to resource 104 and resource 105.

The local event propagation manager assigned to resource 105 does not execute an event handler in response to the received event notification. The local event propagation manager assigned to resource 104 does execute an event handler in response to the received event notification, and transmits the event notification to the local event propagation manager assigned to resource 106. The local event propagation manager assigned to resource 105 and the local event propagation manager assigned to resource 106 both determine not to execute an event handler and not to transmit the event notification to neighbouring local event propagation managers.

Alternatively, it may be that the initial generation is not performed by the local event propagation manager assigned to resource 101, and that, in fact, the local event propagation manager assigned to resource 102 is configured to observe neighbouring resources and to respond to processing events at neighbouring resources (or specified neighbouring resources) by generating an event notification and/or triggering the execution of an event handler at resource 102.

As an alternative to the local event propagation managers, the event propagation mechanism may be a centralised process manager which stores directed links between resources, the directed links denoting that an event handler is to be executed at one of the linked resources in response to a processing event at the other of the linked resources. The centralised process manager may be a single process manager provided for the entire data graph, or may be assigned to the region/portion of the data graph stored on a particular data storage server. There may be one process manager per data storage server. In the example of Figure 1, it may be that both resource 102 and resource 104 are linked to resource 101 at the process manager. For example, the process manager may be configured to store, for a particular resource, a register of other resources at which event handlers are to be triggered in response to a processing event at the particular resource. In addition, the registration may specify one or more conditions which determine whether or not the event handler is to be executed, and may also specify a particular event handler or category of event handler.

In the example of Figure 1, any conditions stored with the links between resource 102 and resource 101 are satisfied, and hence an event handler is executed at resource 102. Resource 104 may be included in the register at the process manager for resource 101, and hence it may be the processing event at resource 101 that gives rise to the execution of an event handler at resource 104. Alternatively, the resource 104 may be included in the register for resource 102, and the execution of the event handler at resource 102 satisfies the conditions of the registration, so that an event handler at resource 104 is executed.

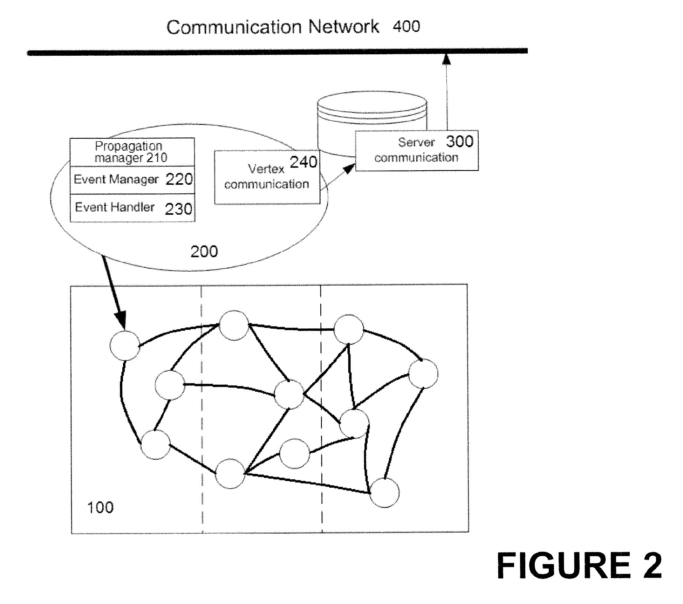

Figure 2 illustrates an embodiment of the present invention, and shows one local event propagation manager 200 in detail. The stored data 100 is shown in its graph representation, wherein the dotted lines illustrate boundaries between regions stored on different data storage servers. A server communication module 300 provides a mechanism for communicating with other entities, such as local event propagation managers, stored on the same data storage server. A communication network 400 provides a mechanism for communicating with entities, such as local event propagation managers, stored on other servers.

The illustrated local event propagation manager 200 is assigned to a particular resource, as denoted by the arrow between the local event propagation manager 200 and a graph resource. A local event propagation manager is provided for each of the remaining graph resources, but these are not illustrated in Figure 2.

The local event propagation manager 200 comprises a propagation manager module 210, an event manager module 220, an event handler 230, and a vertex communication module 240. These functional units are merely an exemplary selection of functional modules configured to carry out the work of local event propagation manager 200. Other distributions of tasks within local event propagation manager 200 are possible, or functionality may simply be performed by the local event propagation manager 200 with no sub division into modules. The event handler 230 is illustrated as a functional component of local event propagation manager 200 in Figure 2. This is an optional arrangement, and the event handler may also be provided at a data storage server level, or be provided as an entity accessible by more than one local event propagation manager. In the example of Figure 2, the event handler 230 is assigned to a particular resource. As a further option, more than one event handler may be provided per resource, for example, one event handler per type/category of event.

The vertex communication module 240 is configured to receive an event notification from a neighbouring local event propagation manager, and also to transmit the event notification to neighbouring local event managers. The propagation manager module 210 is configured to determine whether or not to trigger an execution of any of the event handlers associated with the resource to which the local event propagation manager is assigned, and to determine whether or not to transmit the received event notification to any neighbouring local event propagation managers. The propagation manager module 210 is also responsible for the generation of event notifications, including the attribution and modification of event propagation values. The propagation manager module 210 is configured to maintain the interconnection transmission values attributed to each of the plurality of interconnections that connect the resource to which the local event propagation manager 200 is assigned to other resources.

The event manager module 220 is an optional module that is configured to manage event queues and event priorities on behalf of the event handler 230. The event handler is executable in response to an event and may include processes for determining whether or not to modify the resource at which it is being executed, how to modify said resource, and for carrying out the determined modifications.

The local event propagation managers may be realised as different processing threads running on the data storage server hosting the resource to which they are assigned.

An exemplary process carried out by an exemplary local event propagation manager 200 in a data storage system embodying the present invention will now be set out. In this particular example, graph resources are referred to as vertices.

For a graph vertex $v_0$, each of its graph neighbour ($v_1,...,v_n$) registers its interest on the events occurring at $v_0$. This registration of interest may be explicit and stored as a pointer to $v_0$ at each of its neighbours. Alternatively, the registration of interest may be implicit, and it may be that simply because of the existence of an interconnection from its neighbours to $v_0$, its neighbours are considered to have a registration of interest in $v_0$.

A processing event has an initial momentum (exemplary of the event propagation value mentioned elsewhere in this document) that determines when the event should stop propagating (e.g. when the momentum drops to 0 or below). The initial event momentum is assigned to the processing event by either the local event propagation manager 200 of the resource at which the processing event occurred, or one of its neighbours. The initial event momentum forms part of the content of the event notification that is transferred between local event propagation managers, and its initial value can be assigned based on factors including:

- Data graph features, e.g. events originated at a high degree vertex should have higher momentum;
- Data features, e.g. events associated with domain data assigned as critical (for example, by a user or database administrator) should have higher momentum; or
- Event type, e.g. system event should have higher momentum than data event.

Such momentum value assessment may be configurable depending on the implementation scenario of the embodiment. For an arbitrary edge ($v_0$, $v_i$) (an edge is an interconnection between two resources) where $1 \leq i \leq n$, a value is calculated and assigned to the edge, for example, by the local event propagation manager of the resource that receives event notifications along the edge. The value determines how event momentum is modified following transfer of an event notification between the two vertices along the edge direction from $v_0$ to $v_i$. The value is exemplary of the interconnection transmission value mentioned elsewhere in this document.

The interconnection transmission value may be calculated and/or adjusted based on one or more factors which may include:

- $v_i$'s interest in a particular event categorisation;
- characteristics of the interconnection between the two vertices;
- $v_0$'s confidence in $v_i$; and
- graph properties such as betweeness of an edge: a high betweeness edge may be given a lower interconnection transmission value to allow faster and/or more numerous event propagation (reaching other vertices quicker/less likely to be stopped at the receiving vertex);
- hierarchical edges may be given higher interconnection transmission values than other edges.

If the event successfully reaches $v_i$, where $v_i$ receives the event notification and an event handler is triggered:

- the interconnection transmission value attributed to the edge between $v_0$ and $v_i$ may be adjusted, for example, decreased;
- the event momentum included in the event notification may be increased when transmitting the event notification from $v_i$ to its neighbours.

If $v_i$ rejects the received event notification, that is to say, if the received event notification does not trigger an event handler at $v_i$:

- the interconnection transmission value attributed to the edge between $v_0$ and $v_i$ may be adjusted, for example, increased;
- the event momentum is decreased in the event notification when it is transmitted from $v_i$ to its neighbours.

Interconnection transmission values may be specific to particular event types/categorisations (e.g. IncomingLinkAddedEvent, IncomingLinkDeletedEvent, etc.), so that one interconnection transmission value is maintained per event type/categorisation per interconnection.

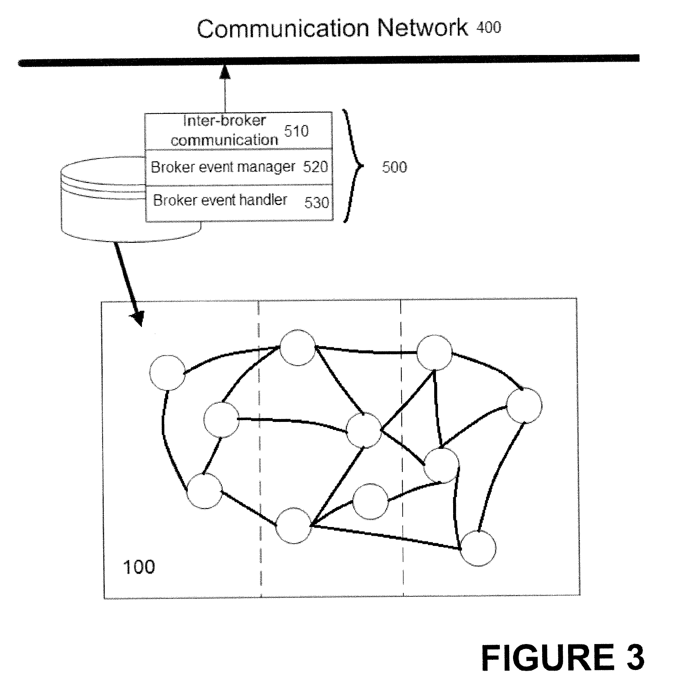

Figure 3 illustrates an alternative to the embodiment of Figure 2. Figure 3 illustrates an embodiment of the present invention, and shows one event broker 500 (an event broker is exemplary of a process manager mentioned elsewhere in this document) in detail. The stored data 100 is shown in its graph representation, wherein the dotted lines illustrate boundaries between regions stored on different data storage servers.

The event broker 500 is assigned to the region of the data graph 100 stored on a particular data storage server. The event broker includes an inter-broker communication module 510 which, in collaboration with the communication network 400, provides a mechanism for communicating with entities, such as event brokers assigned to other servers. The event broker 500 runs as a single processing thread, and the broker event manager 520 manages event queues and priorities and instructs/invokes/triggers event handler executions. The broker event manager 520 provides the functionality of the candidate propagation link identification module and the event handler trigger module mentioned elsewhere in this document. The broker event handler 530 is illustrated as being provided on a per-storage server basis, but there may be different broker event handlers for different event types/categorisations.

An exemplary process carried out by an exemplary event broker 500 in a data storage system embodying the present invention will now be set out. In this particular example, graph resources are referred to as vertices.

An arbitrary vertex $v_i$ files explicitly its interest in event type $e_j$ at vertex $v_0$. This interest is manifest in the embodiment as a candidate propagation link, and may be recorded explicitly at the event broker 500 assigned to the data storage server storing $v_i$ or may be captured as a data annotation of the data encoding the graph. The recorded candidate propagation link may include or be stored in association with some conditions/filtering logic, for example, registering interest for a LinkedAssertedEvent combined with filtering for only specified types of link. In addition, the recorded candidate propagation link may include or be stored in association with particular sections of event handler code, or an indication of a specific event handler or section of event handler code, that should be executed when a processing event occurs at vertex $v_0$ that satisfies the associated conditions.

The event broker 500 may maintains, or otherwise construct (for example by analysing the annotations of the data graph), the full mapping of event interest of the vertices that it manages (the vertices that it manages being those stored on the same data storage server).

A processing event occurring at $v_0$ is captured by the event broker 500 either because $v_0$ is stored on the data storage server storing the graph data to which the event broker 500 is assigned, or because the event broker 500 is informed of the processing event at $v_0$ via another event broker. The event broker 500, via the broker event manager 520, is configured to compile an event queue by determining which of the vertices are linked to $v_0$ via a candidate propagation link, and whether the conditions associated with those links are satisfied. The broker event manager 520 is thereby able to compile a queue of event handler executions at graph vertices.

When communicating through brokers, it is possible that a vertex on one data storage server may eventually communicate with a vertex on another data storage server directly (through the broker). For example, an event handler is executed at a first vertex stored on a first data storage server. The event broker assigned to a second data storage server is informed of the execution, and identifies a vertex stored on the second data storage server that has a candidate propagation link to the first vertex. The first and second vertex communicate across the data storage server boundary. When vertex $v_j$ on server $s_j$ commonly receives events from vertex $v_i$ on server $s_i$ (i.e. more than a threshold frequency), the propagation path is recorded, and therefore an adaptive relocation module has a basis upon which to decide to move $v_j$ and $v_i$ together onto the same server. In this case, direct communication (or edge $(v_i, v_j)$) is not mandatory, but the frequent co-occurrence of the two vertices on propagation paths is a sufficient basis for relocation.

As an example of the functionality of an adaptive relocation module, configured to relocate vertices from one data storage server to another, consider the following example. If the brokered event propagation is frequently done between $v_s$ and $v_t$ along path $v_s$, $v_0$,..., $v_m$, $v_t$, the locality of all the involved vertices are adjusted as follows: let $sid(v_x)$ return the server ID containing vertex $v_x$ and $cost(v_x, id_s)$ be a cost function of moving vertex $v_x$ to an arbitrary machine $sid_y$. The adaptive relocation module is configured to minimise the total cost function by devising the optimum allocation of vertices to servers. The server may or may not already contain vertices on the path.

$$\arg \min_{id \in |sid(v_x)|, v_x \in G} \left( \sum_{i=0}^{m} cost(v_i, id) \right)$$

It could be the case that a server does not contain the path vertices is selected to achieve the minimum overall cost. The cost function is implementation specific and may be, for example, a function which rises in proportion to the number of data storage server boundaries crossed by propagation paths. Of course, such a function is intended to minimise future cross boundary propagation paths, but the function is based on past propagation path data. Such propagation path data may be recorded by the event broker 500, and may involve some collaboration between event brokers assigned to different data storage servers.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A data storage system configured to store data encoding a data graph, the data graph comprising a plurality of resources and a plurality of interconnections, each of the plurality of interconnections connecting two resources from among the plurality of resources and representing a relationship between the linked resources; the data storage system comprising:

    a data storage apparatus configured to store the data encoding the data graph;

a plurality of event handlers, each event handler being associated with one or more resources from among the plurality of resources, and being executable at the or each of the respective associated resources; and

an event propagation mechanism configured to respond to a processing event at a resource from among the plurality of resources by triggering the execution of one or more event handlers from among the plurality of event handlers at respective associated resources.

2. A data storage system according to claim 1, wherein the processing event at the resource is modification of data encoding the resource by an event handler associated with the resource, from among the plurality of event handlers.

3. A data storage system according to claim 1, wherein the processing event at the resource is a generation of a new resource forming part of the plurality of resources as a consequence of a direction from the resource.

4. A data storage system according to claim 1, wherein:

the or each of the resources at which the event handlers are triggered by the event propagation mechanism is connected to the resource at which the processing event occurred by one or more interconnections from among the plurality of interconnections.

5. A data storage system according to any of claims 1 to 4, wherein:

the event propagation mechanism is a local event propagation manager assigned to each of the plurality of resources;
each local event propagation manager being configured to receive an event notification from a first neighbouring local event propagation manager, and in response to the received event notification, to determine:

whether or not to trigger an execution of any of the event handlers associated with the resource to which the local event propagation manager is assigned; and
whether or not to transmit the received event notification to any remaining neighbouring local event propagation managers other than the first neighbouring local event propagation manager; wherein
neighbouring local event propagation managers are those local event propagation managers, from among the plurality of local event propagation managers, that are assigned to a resource linked via an interconnection, from among the plurality of interconnections, to the resource to which the local event propagation manager is assigned.

6. A data storage system according to claim 5, wherein
a local event propagation manager from among the local event propagation managers is configured to generate an event notification in response to a processing event at either the resource to which the local event propagation manager is assigned or the resource to which one of the respective neighbouring local event propagation managers is assigned.

7. A data storage system according to claim 6, wherein
generating the event notification includes attributing an event propagation value to the event notification; and
each of the plurality of local event propagation managers is configured to modify the event propagation value in the received event notification by:

if, in response to receiving the received event notification, it is determined to trigger the execution of any of the event handlers associated with the resource to which the local event propagation manager is assigned, increasing the event propagation value; and/or
if, in response to receiving the received event notification, it is determined not to trigger the execution of any of the event handlers associated with the resource to which the local event propagation manager is assigned, decreasing the event propagation value; and/or
if, following the modification of the event propagation value, the event propagation value is below a predetermined threshold value, it is determined not to transmit the received event notification to any of the neighbouring local event propagation managers.

8. A data storage system according to claim 7, wherein
each of the local event propagation managers is configured to maintain an interconnection transmission value attributed to each of the plurality of interconnections that connect the resource to which the local event propagation manager is assigned to another resource; and wherein

the interconnection transmission value attributed to the interconnection linking to the resource from which a received event notification is received determines the amount by which the event propagation value is increased and/or decreased.

**9.** A data storage system according to claim 8, wherein

maintaining the interconnection transmission value attributed to each of the plurality of interconnections that link the resource to which the local event propagation manager is assigned to another resource includes, when an event notification is received from the event propagation manager assigned to the another resource:

> if, in response to receiving the received event notification, it is determined not to trigger the execution of any of the event handlers associated with the resource to which the local event propagation manager is assigned, increasing the interconnection transmission value attributed to the interconnection linking to the another resource; and/or
> if, in response to receiving the received event notification, it is determined not to trigger the execution of any of the event handlers associated with the resource to which the local event propagation manager is assigned, decreasing the interconnection transmission value attributed to the interconnection linking to the another resource.

**10.** A data storage system according to claim 9, wherein, generating the event notification includes assigning an event type to the event notification from a predetermined set of event types in dependence upon the processing event in response to which the event notification is generated; and

each of the local event propagation managers is configured to maintain, for each of the plurality of interconnections that link the resource to which the local event propagation manager is assigned to another resource, one interconnection transmission value per event type from the predetermined set of event types.

**11.** A data storage system according to any of claims 1 to 4, wherein:

> the event propagation mechanism is a process manager, the process manager comprising:

>> a candidate propagation link identification module configured to identify recorded candidate propagation links, a candidate propagation link being from a second to a first resource from among the plurality of resources, in association with one or more trigger conditions and an event handler associated with the second resource; and
>> an event handler trigger module configured to, in response to a processing event at a resource from among the plurality of resources, refer to the candidate propagation link identification module to identify recorded candidate propagation links in which the resource at which the processing event occurred is the first resource, and, for each identified recorded candidate propagation link, to determine whether or not the one or more trigger conditions are satisfied, and if it is determined that the one or more trigger conditions are satisfied, to trigger the execution, at the second resource of the candidate propagation link, of the event handler associated with the second resource in the candidate propagation link.

**12.** A data storage system according to claim 11, wherein the processing event is the execution of an event handler associated with the resource from among the plurality of event handlers.

**13.** A data storage system according to claim 10 or 11, further comprising:

> a propagation path recording module configured to, for the execution of an event handler from among the plurality of event handlers at a respective associated resource, maintain, as a propagation path, a record identifying:

>> the executed event handler and the respective associated resource;
>> any event handlers triggered by the event handler trigger module in response to the execution of the executed event handler at the respective associated resource;
>> any event handlers triggered by the event handler trigger module in response to the execution of the or each of the triggered event handlers; and
>> for the or each of the triggered event handlers, the resource at which the triggered event handler executed, respectively.

**14.** A data storage system according to claim 13, further comprising:

an adaptive relocation module, the adaptive relocation module being configured to relocate a particular resource from among the plurality of resources from a first data storage server from among the plurality of data storage servers to a second storage server from among the plurality of data storage servers, the adaptive relocation module being configured to determine the identity of the second data storage server based on the or each identity of the one or more data storage servers from among the plurality of data storage servers storing resources which are co-recorded in propagation paths with the particular resource.

**15.** A method for performance in a data storage system configured to store data encoding a data graph, the data graph comprising a plurality of resources and a plurality of interconnections, each of the plurality of interconnections being directional and linking two resources from among the plurality of resources and representing a relationship between the linked resources, the data storage system comprising a plurality of data storage servers each being configured to store data encoding a portion of the data graph;
the method comprising:

storing a plurality of event handlers, each event handler being stored in association with one or more resources from among the plurality of resources, and being executable at the or each of the respective associated resources; and
responding to a processing event at a resource from among the plurality of resources by triggering the execution of one or more event handlers from among the plurality of event handlers at respective associated resources.

**16.** A suite of computer programs which, when executed by a plurality of data storage servers configured to communicate with one another over a network, causes the plurality of data storage servers to function as a data storage system according to claims 1 to 14 or to perform the method of claim 15.

**FIGURE 1**

Communication Network 400

Propagation
manager 210

Event Manager 220

Event Handler 230

Vertex 240
communication

Server 300
communication

200

100

# FIGURE 2

Communication Network 400

Inter-broker communication 510

Broker event manager 520

Broker event handler 530

500

100

# FIGURE 3

Europäisches
Patentamt

European
Patent Office

Office européen
des brevets

**EUROPEAN SEARCH REPORT**

Application Number

EP 14 15 5976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FENG LI ET AL: "MOPS: Providing Content-Based Service in Disruption-Tolerant Networks", DISTRIBUTED COMPUTING SYSTEMS, 2009. ICDCS '09. 29TH IEEE INTERNATIONAL CONFERENCE ON, IEEE, PISCATAWAY, NJ, USA, 22 June 2009 (2009-06-22), pages 526-533, XP031485567, ISBN: 978-0-7695-3659-0 * page 526 - page 531 * | 1-16 | INV. G06F17/30 |
| Y | US 2003/014513 A1 (RUTHS DEREK AUGUSTUS SAMUEL [US] ET AL) 16 January 2003 (2003-01-16) * column 1 - column 13 * | 1-16 | |
| Y | US 8 386 495 B1 (SANDLER MARK M [US] ET AL) 26 February 2013 (2013-02-26) * page 1, paragraph 10 - page 17, paragraph 153 * | 1-16 | |
| A | SOULEIMAN HASAN ET AL: "Towards unified and native enrichment in event processing systems", DISTRIBUTED EVENT-BASED SYSTEMS, ACM, 2 PENN PLAZA, SUITE 701 NEW YORK NY 10121-0701 USA, 29 June 2013 (2013-06-29), pages 171-182, XP058021398, DOI: 10.1145/2488222.2488347 ISBN: 978-1-4503-1758-0 * the whole document * | 1-16 | TECHNICAL FIELDS SEARCHED (IPC) G06F |

The present search report has been drawn up for all claims

| Place of search | Date of completion of the search | Examiner |
|---|---|---|
| The Hague | 25 July 2014 | Warry, Lawrence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 15 5976

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2014

| Patent document cited in search report | | Publication date | Patent family member(s) | Publication date |
|---|---|---|---|---|
| US 2003014513 | A1 | 16-01-2003 | NONE | |
| US 8386495 | B1 | 26-02-2013 | NONE | |

EPO FORM P0459

For more details about this annex : see Official Journal of the European Patent Office, No. 12/82